# EUROPÄISCHE PATENTSCHRIFT

(11) **EP 1 142 222 B1**
(45) Veröffentlichungstag und Bekanntmachung des Hinweises auf die Patenterteilung: **23.02.2005**
(21) Anmeldenummer: 99962114.7
(22) Anmeldetag: 01.12.1999
(51) Int. Cl.: H04L 12/56

(54) **VERFAHREN ZUR BEREITSTELLUNG EINER STABILEN QUALITÄTSGÜTE FÜR DATENDIENSTE INNERHALB EINES PAKETVERMITTELNDEN NETZES**
METHOD FOR PROVIDING A STABLE QUALITY OF DATA SERVICES WITHIN A PACKET-SWITCHING NETWORK
PROCEDE POUR FOURNIR DES SERVICES DE TRANSMISSION DE DONNEES DE QUALITE STABLE DANS UN RESEAU DE COMMUTATION DE PAQUETS

(30) Priorität: 15.12.1998 DE 19857822
(43) Veröffentlichungstag der Anmeldung: 10.10.2001
(73) Patentinhaber: SIEMENS AKTIENGESELLSCHAFT, 80333 München (DE)
(72) Erfinder: PREHOFER, Christian, D-81477 München (DE)
(86) Internationale Anmeldenummer: PCT/DE1999/003851
(87) Internationale Veröffentlichungsnummer: WO 2000/036792

(56) Entgegenhaltungen:
- EP-A- 0 790 725
- WO-A-98/28938
- BUSSE I ET AL: "Dynamic QoS control of multimedia applications based on RTP" COMPUTER COMMUNICATIONS,NL,ELSEVIER SCIENCE PUBLISHERS BV, AMSTERDAM, Bd. 19, Nr. 1, 1. Januar 1996 (1996-01-01), Seiten 49-58, XP004032389 ISSN: 0140-3664 in der Anmeldung erwähnt
- ALMESBERGER W ET AL: "SRP: A SCALABLE RESOURCE RESERVATION PROTOCOL FOR THE INTERNET" COMPUTER COMMUNICATIONS,NL,ELSEVIER SCIENCE PUBLISHERS BV, AMSTERDAM, Bd. 21, Nr. 4, 15. September 1998 (1998-09-15), Seiten 1200-1211, XP000667615 ISSN: 0140-3664
- LEE W C ET AL: "DYNAMIC CONNECTION MANAGEMENT FOR CALL-LEVEL QOS GUARANTEE IN INTEGRATED COMMUNICATION NETWORKS" PROCEEDINGS OF THE CONFERENCE ON COMPUTER COMMUNICATIONS (INFOCOM),US,LOS ALAMITOS, IEEE COMP. SOC. PRESS,1994, Seiten 1073-1082, XP000496568 ISBN: 0-8186-5572-0

## Beschreibung

Die Erfindung betrifft ein Verfahren zur Bereitstellung einer stabilen Qualitätsgüte für Datendienste innerhalb eines paketvermittelnden Netzes gemäß dem Oberbegriff des Patentanspruchs 1.

Demnach möchte beispielsweise ein Teilnehmer Datendienste eines paketvermittelnden Netzes z.B. des Internets nutzen. Üblicherweise erhält der Teilnehmer einen Zugang zum paketvermittelnden Netz, indem er sich mit seiner Teilnehmerendeinrichtung z.B. einem Personalcomputer entweder direkt oder indirekt über eine Nebenstellenanlage bzw. Ortsvermittlungsstelle an einem Zugangsknoten zum paketvermittelnden Netz einwählt und eine Verbindung zu einem Datendienste zur Verfügung stellenden Netzknoten des paketvermittelnden Netzes z.B. einem Rechner eines Dienstanbieters aufbaut sowie von einem solchen Netzknoten Datendienste z.B. mit Hilfe einer auf seinem Personalcomputer vorhandenen Anwendungsprogramm anfordert.

Entsprechende Verhältnisse treffen ebenfalls auf ein privates paketvermittelndes Netz z.B. einem Firmennetz zu. Hierbei ist meist der Zugangsknoten zum privaten paketvermittelnden Netz in die Teilnehmerendeinrichtung oder in die Nebenstellenanlage integriert. Solch ein privates paketvermittelndes Netz kann auch einen Zugang zu einem weiteren privaten bzw. öffentlichen paketvermittelnden Netz z.B. einem Firmennetz bzw. dem Internet aufweisen. Demgemäß kann sich ein Datendienste zur Verfügung stellender Netzknoten nicht nur im öffentlichen sondern auch in einem privaten paketvermittelnden Netz befinden.

In einem solchen paketvermittelnden Netz wie z.B. dem Internet ist die Datenübertragung normalerweise verbindungslos, d.h. die Datenpakete mit identischer Ursprungs- und Zieladresse werden voneinander unabhängig transportiert, so dass weder die Reihenfolge noch eine Ablieferung der Datenpakete beim Zielknoten garantiert wird (OSI-Schicht-3-Protokoll). Daher kann auch keine Qualitätsgüte der Übertragung von Datenpaketen zwischen Ursprungs- und Zielknoten wie beispielsweise eine gewisse Bandbreite, Verzögerungszeiten, ein bestimmter Durchsatz und eine geringe Paketverlustrate zugesichert werden.

Insbesondere Videoübertragungsdienste (z.B. Video on Demand) und verschiedene Telefondienste (z.B. Voice over IP) erfordern im Internet eine sichere und schnelle Datenübertragung mit einer sichergestellten konstanten Qualitätsgüte. Von einem Teilnehmer angeforderte Datendienste wie z.B. Video on Demand, Voice over IP oder Videokonferenzschaltungen erfordern eine sichere und schnelle Datenübertragung mit einer sichergestellten und zugleich stabilen Qualitätsgüte.

Bezüglich des Internets wird derzeit ein Ansatz unter dem Begriff "Differentiated Services" diskutiert, der die geforderte Bandbreite und geringere Verzögerungszeiten bei der Übertragung der zu solchen Datendiensten gehörenden Datenpakete garantiert.

Beispielsweise wird in einem sogenannten Internet-Draft-Dokument "Differentiated Services Model und Definitions", verfasst von K. Nichols und S. Blake, veröffentlicht durch die Internet Engineering Task Force im Februar 1998, ein Verfahren vorgeschlagen, das eine beschleunigte Übertragung von Datenpaketen von einem Ursprungsknoten zu einem Zielknoten ermöglicht. Für Datenpakete, die zu einem eine hohe Übertragungsbandbreite anfordernden Datendienst gehören, werden jeweils bestimmte Bits des sogenannten TOS-Bytes im Kopfteil solcher Datenpakete gesetzt. Gemäß der gesetzten Bits im TOS-Byte sind die Datenpakete unterschiedlichen Qualitätsklassen zugeteilt. Abhängig von der zugeteilten Qualitätsklasse werden die Datenpakete in den Zwischenknoten eventuell bevorzugt behandelt, wodurch vor allem eine beschleunigte Weiterleitung also nahezu ohne Verzögerung zum nächsten Zwischen- bzw. Netzknoten angestrebt wird. Ein Beispiel für eine Qualitätsklasse mit niederer Priorität ist die im Internet übliche "Best-Effort"-Klasse. Demgemäss werden die Datenpakete so bald wie möglich und so viele von einem Datendienst wie möglich behandelt. Als eine Qualitätsklasse mit sehr hoher Priorität sei beispielsweise die "Premium"-Klasse genannt, die sich durch äußerst geringe Verzögerungszeiten auszeichnet und deshalb quasi mit einer virtuellen Verbindung vergleichbar ist.

Ergänzende Ausführungen zum vorstehend erläuterten Verfahren sind in weiteren Internet-Draft-Dokumenten "An Architecture for Differentiated Services", verfasst von D. Blake, S. Blake, M. Carlson, E. Davies, Zh. Wang, W. Weiss, veröffentlicht durch die Internet Engineering Task Force im Mai 1998, und "A Framework for Differentiated Services", verfasst von Y. Bernet, J. Binder, S. Blake, M. Carlson, S. Keshav, E. Davies, B. Ohlman, D. Verma, Zh. Wang, W. Weiss, veröffentlicht durch die Internet Engineering Task Force im Oktober 1998, dargelegt.

Ein wesentlicher Nachteil vorstehend geschilderten Verfahrens besteht darin, dass Datendiensten, deren Datenpakete einer bestimmten Qualitätsklasse zugeordnet worden sind, durch bevorzugte Behandlung nur eine von der Netzauslastung abhängige Qualitätsgüte zugesichert werden kann.

Dieses Problem macht sich insbesondere dann bemerkbar, wenn viele Datendienste von Teilnehmern angefordert werden, die eine konstante bzw. stabile und zugleich hohe Qualitätsgüte bezüglich der Verzögerung und der Übertragungsbandbreite benötigen. In diesem Fall kann nicht mehr jedem Datendienst die geforderte Qualitätsgüte bereitgestellt werden.

Ein ganz anderer Ansatz, der seinen Ursprung im Zusammenhang mit Multimediaanwendungen in ATM-Netzen (Asynchronous Transfer Mode) findet, in denen bekanntermaßen virtuelle Verbindungen zwischen Teilnehmern und den Datendienste zur Verfügung stellenden Netzknoten aufgebaut werden, liegt darin, die Übertragungsbandbreite von Multimediaanwendungen an die Netzauslastung anzupassen.

Übertragen auf verbindungslose paketvermittelnde Netze wird in einer Veröffentlichung von I. Busse, B. Deffner und H. Schulzrinne mit dem Titel "Dynamic QoS Control of Multimedia Applications based on RTP", First International Workshop on High Speed Networks and Open Distributed Platforms, St. Petersburg (Rußland), Juni 1995, ein Verfahren vorgestellt, daß bei Multimediaanwendungen der Sender abhängig von der beim Empfänger erhaltenen Übertragungsqualität die Übertragungsbandbreite dynamisch anpaßt. Insbesondere wird die Übertragungsbandbreite dann herabgesenkt, wenn dem Sender bei einer hohen Netzauslastung eine hohe Paketverlustrate am Empfänger gemeldet worden ist. Hierzu wird das sogenannte RTP/RTCP-Protokoll verwendet, das dem Sender eine Rückmeldung über die beim Empfänger erhaltene Übertragungsqualität liefert.

Ein wesentlicher Nachteil dieses Verfahrens liegt demnach darin, daß solchen Datendiensten bei einer hohen Netzauslastung keine stabile Übertragungsqualität zugesichert werden kann. Anstatt eine konstante bzw. stabile Übertragungsbandbreite zu garantieren, wird vielmehr bei einer hohen Netzauslastung die Übertragungsbandbreite verringert. Dadurch wird der Datendienst mit einer schlechten Qualität empfangen. Dies kann sogar soweit führen, daß die Datenübertragung wegen einer für den Datendienst zu schlechten Qualität abgebrochen werden muß.

Die Aufgabe der Erfindung besteht nun darin, ein Verfahren der im Oberbegriff des Patentanspruchs 1 angegebenen Art dahingehend zu entwickeln, daß bei der Übertragung eines angeforderten Datendienstes die vom Datendienst geforderte stabile Qualitätsgüte bereitgestellt wird.

Diese Aufgabe wird durch die im Kennzeichen des Anspruchs 1 angegebenen Merkmale gelöst. Weitere Ausgestaltungen der Erfindung sind in Unteransprüchen gekennzeichnet.

Erfindungsgemäß wird die Bereitstellung einer stabilen Qualitätsgüte für solche Datendienste dadurch erreicht, daß während der Übertragung von zu einem solchen Datendienst gehörenden Datenpaketen, die einer Qualitätsklasse mit dem Zweck einer eventuell bevorzugten Behandlung zugeordnet worden sind, diese abhängig von einem Vergleichsergebnis zwischen einer rückgemeldeten im paketvermittelnden Netz tatsächlich vorhandenen Qualtitäsgüte mit der geforderten Qualitätsgüte gegebenenfalls einer anderen Qualitätsklasse zugeordnet werden, von der die Bereitstellung der vom Datendienst geforderten Qualitätsgüte erwartet wird. Mit anderen Worten: Der Sender bzw. wenigstens ein Zwischenknoten im paketvermittelnden Netz stellt die Qualität der Übertragung anhand von die Qualitätsgüte angebenden Rückmeldungen fest und vergleicht die rückgemeldete Qualitätsgüte mit der vom Datendienst geforderten Qualitätsgüte.

Für den Fall, daß die rückgemeldete Qualitätsgüte unter der geforderten Qualitätsgüte liegt, wird der Sender bzw. ein Zwischenknoten die zu dem Datendienst gehörenden Datenpakete einer höheren Qualitätsklasse zuordnen, von der die vom Datendienst geforderte Qualitätsgüte erwartet wird. Wenn die rückgemeldete Qualitätsgüte nahezu den gleichen oder einen höheren Wert als die vom Datendienst geforderte Qualitätsgüte aufweist, dann ordnet der Sender bzw. der Zwischenknoten die zu dem Datendienst gehörenden Datenpakete gegebenenfalls einer niederen Qualitätsklasse zu, wenn mit großer Wahrscheinlichkeit eine gleichbleibende Qualitätsgüte erwartet wird. Andernfalls wird die zu Beginn der Datenübertragung zugeteilte Qualitätsklasse beibehalten.

Dadurch wird gerade bei einer hohen Auslastung die von den Netzgegebenheiten abhängige dynamische Anpassung der Qualitätsklasse ein Absinken der Qualitätsgüte während der Datenübertragung vermieden und damit die Qualitätsgüte stabil gehalten. Zusätzlich läßt sich durch das erfindungsgemäße Verfahren der Ressourcenverbrauch im paketvermittelnden Netz steuern.

Eine Weiterbildung der Erfindung bietet zusätzlich zu den verschiedenen Qualitätsklassen mehrere Prioritätsklassen innerhalb einer Qualitätsklasse an. Demnach werden die zu einem Datendienst gehörenden Datenpakete zuerst einer anderen Prioritätsklasse innerhalb einer Qualitätsklasse zugeteilt, bevor sie einer anderen Qualitätsklasse zugeordnet werden. Dadurch ergibt sich eine zusätzliche Korrekturmöglichkeit der rückgemeldeten Qualitätsgüte an die vom Datendienst geforderte Qualitätsgüte, ohne die Qualitätsklasse wechseln zu müssen.

Gemäß einer vorteilhaften Ausgestaltung der Erfindung werden die zu einem Datendienst gehörenden Datenpakete bei einem Wechsel in eine andere Qualitätsklasse zuerst der niedrigsten Prioritätsklasse innerhalb der neu zugeteilten Qualitätsklasse zugeordnet. Dadurch kann eine durch den Wechsel hervorgerufene Beeinträchtigung der Übertragung von der anderen Qualitätsklasse zugeordneten Datenpaketen verhindert werden.

Eine weitere Ausgestaltung der Erfindung sieht vor, daß für den Vergleich der rückgemeldeten Qualitätsgüte mit der vom Datendienst geforderten Qualitätsgüte zumindest ein oberer und zumindest ein unterer Schwellwert eingeführt werden. So führt ein Überschreiten zumindest eines oberen Schwellwertes durch den Differenzwert zwischen der geforderten und der rückgemeldeten Qualitätsgüte dazu, daß die zum Datendienst gehörenden Datenpakete einer höheren Qualitätsklasse oder gegebenenfalls einer höheren Prioritätsklasse zugeordnet werden. Bei Unterschreiten zumindest eines unteren Schwellwertes durch den Differenzwert zwischen der geforderten und der rückgemeldeten Qualtitätsgüte werden die Datenpakete einer niederen Qualitätsklasse oder gegebenenfalls einer niederen Prioritätsklasse zugeordnet. Dies hat den Vorteil einer zusätzlichen Stabilisierung der Qualitätsgüte während der Datenübertragung, indem ein ständiger Wechsel zwischen den Qualitätsklassen bzw. den Prioritätsklassen vermieden wird.

Eine weitere vorteilhafte Ausgestaltung der Erfindung zieht neben der Qualität der Übertragung von solchen Datenpaketen einen weiteren Vergleichsparameter, nämlich der Netzauslastung, heran. Bei nahezu gleichem Wert der rückgemeldeten Qualitätsgüte und der vom Datendienst geforderten Qualitätsgüte hängt die Zuordnung der zum Datendienst gehörenden Datenpakete zu einer Qualitätsklasse zusätzlich von der Netzauslastung ab. Bei einer hohen Netzauslastung werden die Datenpakete eher einer hohen Qualitätsklasse oder gegebenenfalls einer hohen Prioritätsklasse zugeteilt und bei einer niedrigen Netzauslastung werden dieselben eher einer niedrigen Qualitätsklasse oder gegebenenfalls einer niedrigen Prioritätsklasse zugeordnet. Der zusätzliche Vergleichsparameter erhöht die Wahrscheinlichkeit, daß bei einem Wechsel der Qualitätsklasse die zu erwartende Qualitätsgüte erreicht oder zumindest beibehalten wird.

Eine Weiterbildung der Erfindung bezieht sich auf eine vorteilhafte Implementierung bezüglich der der zugeordneten Qualitätsklasse entsprechenden Behandlung solcher Datenpakete in einen Zwischenknoten. Vor der Weiterleitung solcher Datenpakete werden diese in einer ihrer Qualitätsklasse entsprechenden Warteschlange zwischengespeichert.

Gemäß einer weiteren Ausgestaltung der Erfindung werden die gegebenenfalls in einer Qualitätsklasse vorhandenen Prioritätsklassen in der Weise vorteilhaft implementiert, daß die an einen Zwischenknoten eingehenden zu einem Datendienst gehörenden Datenpakete vor ihrer Weiterleitung in einer Warteschlange zwischengespeichert und mit einer ihrer Prioritätsklasse entsprechenden Marke gekennzeichnet werden, anhand welcher die gekennzeichneten Datenpakete bei einem Überlauf der Warteschlange verworfen werden können.

Nachstehend wird ein Ausführungsbeispiel der Erfindung unter Bezugnahme auf eine Zeichnung näher beschrieben.

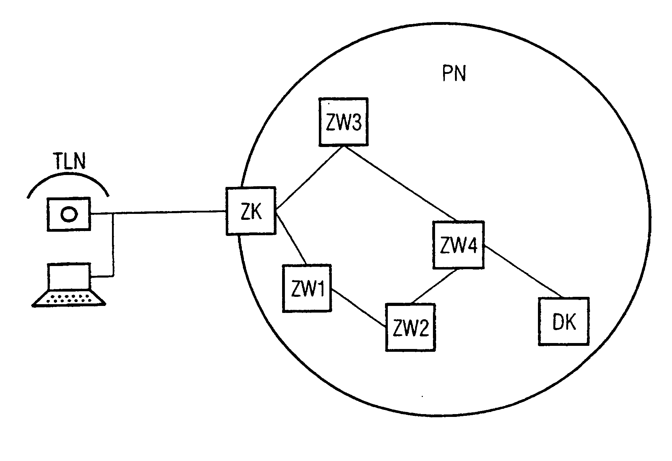

Die Figur zeigt ein paketvermittelndes Netz, auf das das erfindungsgemäße Verfahren angewendet werden kann.

Demnach ist eine Teilnehmerendeinrichtung TLN über einen Zugangsknoten ZK mit dem paketvermittelnden Netz PN z.B. dem Internet verbunden. Das angedeutete paketvermittelnde Netz PN könnte ebenfalls ein privates paketvermittelndes Netz z.B. ein Firmennetz sein. Im Falle eines privaten paketvermittelnden Netzes ist meist der Zugangsknoten ZK in die Teilnehmerendeinrichtung oder in die Nebenstellenanlage integriert. Solch ein privates paketvermittelndes Netz kann auch einen Zugang zu einem weiteren privaten bzw. öffentlichen paketvermittelnden Netz z.B. einem Firmennetz bzw. dem Internet aufweisen. In der Figur ist dann das paketvermittelnde Netz PN als ein sämtliche private bzw. öffentliche paketvermittelnde Netze umfassendes Kommunikationsnetz aufzufassen.

Des weiteren wird in der Figur ein Rechner DK z.B. eines Dienstanbieters gezeigt, der Teilnehmern Datendienste wie z.B. Video on Demand oder Voice over IP zur Verfügung stellt und sich im paketvermittelnden Netz PN befindet. Die in der Figur zwischen den Rechner DK und den Zugangsknoten ZK zwischengeschalteten Zwischenknoten ZW1 bis ZW4 deuten an, daß es mehrere Verbindungsmöglichkeiten zwischen dem Rechner DK und dem Zugangsknoten ZK geben kann. So ist es z.B. im Internet, wie bereits eingangs erwähnt, üblich, daß Datenpakete unabhängig voneinander auf unterschiedlichen Wegen zu ihrem Ziel gelangen.

Im Beispiel wählt sich ein Teilnehmer mit seiner Teilnehmerendeinrichtung TLN z.B. einem Personalcomputer über die Verbindung zum Zugangsknoten ZK in das paketvermittelnde Netz PN ein und baut mit Hilfe eines auf seiner Teilnehmerendeinrichtung vorhandenen Anwendungsprogramm eine Verbindung z.B. über die Zwischenknoten ZW1 bis ZW4 zu einem Datendienste zur Verfügung stellenden Rechner DK eines Dienstanbieters auf. Der Teilnehmer fordert z.B. einen Videoübertragungsdienst an, die eine Übertragungsbandbreite von 100 kBit/s erfordert. Demgemäß werden die zum Videoübertragungsdienst gehörenden Datenpakete durch Setzen eines bestimmten Bitmusters im sogenannten TOS-Byte eines solchen Datenpaketes z.B. einer mittleren Qualitätsklasse zugeordnet. Angenommen es gäbe Qualitätsklassen von A (z.B. Premium), B (z.B. Normal) und C (z.B. Best Effort), wobei A die höchste Klasse auszeichnet, dann sei im Beispiel die zum Videoübertragungsdienst gehörenden Datenpakete der Klasse B zugeteilt.

Im Idealfall sind die Qualitätsklassen weiter in Prioritätsklassen z.B. 1 (niedrig) bis 8 (hoch) unterteilt. Beispielsweise seien die zum Videoübertragungsdienst gehörenden Datenpakete der Prioritätsklasse 4 zugeordnet, wobei die Prioritätsklasse ebenfalls im sogenannten TOS-Byte solcher Datenpakete gekennzeichnet sein kann.

Zu Beginn der Übertragung des Videoübertragungsdienstes werden die Datenpakete also mit der Qualitätsklasse B und der Prioritätsklasse 4 gesendet. Dem Sender, im Beispiel der Rechner eines Dienstanbieters DK, wird während der Übertragung mit Hilfe eines Protokolls z.B. dem eingangs erwähnten RTP/RTCP-Protokolls die Qualitätsgüte wie z.B. die Bandbreite, Verzögerungszeiten an den Netzknoten und die Paketverlustrate der Übertragung von einem Zwischenknoten z.B. ZW1 bzw. vom Empfänger z.B. ZK oder TLN rückgemeldet und vergleicht die rückgemeldete Qualitätsgüte mit der geforderten Qualitätsgüte. Zweckmäßigerweise sind für den Vergleich mindestens eine obere Schranke und wenigstens eine untere Schranke festgelegt, deren Über- bzw. Unterschreiten durch den Differenzwert zwischen der geforderten (SOLL-Wert) und der rückgemeldeten Qualitätsgüte (IST-Wert) beispielsweise der Übertragungsbandbreite einen Wechsel in eine andere Qualitätsklasse oder gegebenenfalls Prioritätsklasse auslöst. Der IST-Wert kann hierbei z.B. durch den Durchschnittswert mit gegebenenfalls einer festgelegten zulässigen Abweichung (z.B. +/- 5 Prozent) von über einen bestimmten Zeitraum (z.B. 1 Sekunde) periodisch rückgemeldeten Qualitätsgütewerten bestimmt werden. Demnach können die Schranken bzgl. der Differenz zwischen dem SOLL-Wert und dem IST-Wert als Auslöser für einen Wechsel in eine höhere/niedrigere Qualitätsklasse bzw. Prioritätsklasse derart eingestellt werden, daß sich beispielsweise folgende Regeln ergeben:
1. Wenn eine positive Differenz zwischen SOLL- und IST-Wert einen Wert von mehr als 128 kBit/s hat, dann folgt ein Wechsel in die höchste Qualitätsklasse A.
2. Eine entsprechende negative Differenz von weniger als -128 kBit/s löst einen Wechsel in die niedrigste Qualitätsklasse C aus.
3. Bei einer positiven Differenz von mehr als 64 kBit/s folgt ein Wechsel in die nächst höhere Qualitätsklasse.
4. Bei einer entsprechenden negativen Differenz von weniger als -64 kBit/s wird in die nächst niedrigere Qualitätsklasse gewechselt.
5. Wenn die positive Differenz weniger als 64 kBit/s oder die negative Differenz mehr als -64 kBit/s ausmacht, dann wird die Qualitätsklasse beibehalten.
6. Eine positive bzw. negative Differenz von mehr als 8 kBit/s bzw. weniger als -8 kBit/s führt zu einem Wechsel in die nächst höhere bzw. niedrigere Prioritätsklasse (max. 8 Prioritätsklassen).

Ähnliche Regeln können ebenfalls für andere Qualitätsgütemerkmale als für die Übertragungsbandbreite wie z.B. für die Verzögerungszeit, die Paketverlustrate bzw. den Durchsatz festgelegt werden. Vor allem bei einem Sprachdatendienst wie Voice over IP gäbe weniger die Übertragungsbandbreite als die Verzögerungszeit und möglicherweise die Paketverlustrate den Ausschlag für einen Wechsel der Qualitätsklasse.

Beispielhaft wird dem Sender z.B. DK eine beim Empfänger z.B. TLN erhaltene Übertragungsbandbreite von 76 kBit/s anstatt der geforderten Übertragungsbandbreite von 100 kBit/s rückgemeldet. Daraufhin ordnet der Sender die zum Videoübertragungsdienst gehörenden Datenpakete beispielsweise gemäß der vorstehend angegebenen Regel 5 und 6 von der Prioritätsklasse 4 in die Prioritätsklasse 5. Falls nun die Übertragungsbandbreite von 100 kBit/s festgestellt wird, kann die Prioritätsklasse beibehalten werden. Andernfalls wird eine erneute Zuordnung in eine höhere Prioritätsklasse solange wiederholt, bis die geforderte Übertragungsbandbreite erreicht wird. Unter dem Umstand, daß schon die höchste Prioritätsklasse in der Qualitätsklasse zugeordnet wurde und nur eine Übertragungsbandbreite von z.B. 85 kBit/s erreicht werden konnte, ist eine Zuordnung der zum Videoübertragungsdienst gehörenden Datenpakete in die nächst höhere Qualitätsklasse z.B. A sinnvoll. Zweckmäßigerweise werden diese Datenpakete in der nächst höheren Qualitätsklasse dann zuerst der niedrigsten Prioritätsklasse z.B. 1 zugeordnet, um die Qualität der Übertragung von zu anderen Datendiensten gehörenden Datenpaketen innerhalb dieser Qualitätsklasse nicht zu beeinträchtigen. Für den Fall einer zu starken Beeinflussung der Ubertragungsqualität können die zu dem Videoübertragungsdienst gehörenden Datenpakete gegebenenfalls aus dieser Qualitätsklasse verdrängt und wieder der ursprünglichen Qualitätsklasse zugeteilt werden.

In vorteilhafter Weise kann zu der Bestimmung der Qualitäts- bzw. Prioritätsklasse auch die Netzauslastung herangezogen werden. So kann neben der beim Empfänger erhaltenen Ubertragungsbandbreite auch die Verzögerungszeiten oder Schwankungen in den Verzögerungen rückgemeldet werden. Demzufolge könnte nach einer mehrmaligen Zuordnung in höhere Prioritätsklasse und bei einer im weiteren Verlauf rückgemeldeten geringen Verzögerungszeit versucht werden, die zum Videoübertragungsdienst gehörenden Datenpaketen wieder einer niedrigeren Prioritätklasse oder gegebenenfalls einer niedrigeren Qualitätsklasse zuzuordnen. Im Falle einer hohen Verzögerungszeit, die auf eine hohe Netzauslastung hindeutet, werden die zum Videoübertragungsdienst gehörenden Datenpaketen eher noch höheren Prioritätsklassen zugeteilt bzw. vorwiegend eine höhere Qualitätsklasse zugeordnet. Zusätzlich könnte den zu anderen Datendiensten gehörenden Datenpaketen im paketvermittelnden Netz ein Wechsel in eine höhere Prioritätsklasse bzw. Qualitätsklasse verwehrt werden.

Zweckmäßigerweise sind die Qualitätsklassen in Form von separaten Warteschlangen in den Netzknoten (Zwischenknoten z.B. ZW1 bis ZW4) des paketvermittelnden Netzes implementiert. Die an den Zwischenknoten eingehenden Datenpakete werden vor ihrer Weiterleitung in einer ihrer Qualitätsklasse entsprechenden Warteschlange zwischengespeichert. Die Prioritätsklassen werden sinnvollerweise durch einen sogenannten Drop-Level-Mechanismus realisiert. D.h. die an einem Zwischenknoten eingehenden Datenpakete werden mit einer ihrer Prioritätsklasse entsprechenden Marke versehen und in einer ihrer Qualitätsklasse entsprechenden Warteschlange zwischengespeichert. Im Falle eines Überlaufs der Warteschlange werden die einer niederen Prioritätsklasse zugeordneten Datenpakete zuerst verworfen.

## Patentansprüche

1. Verfahren zur Bereitstellung einer stabilen Qualitätsgüte für Datendienste innerhalb eines paketvermittelnden Netzes (PN), das mindestens einen Zugangsknoten (ZK) zum Anschluss von mindestens einer Teilnehmerendeinrichtung (TLN) und/oder von wenigstens einer Nebenstellenanlage mit zumindest einer angeschalteten Teilnehmerendeinrichtung aufweist und von dessen Netzknoten zumindest ein Netzknoten (DK) Datendienste zur Verfügung stellt, wobei die zu einem Datendienst gehörigen Datenpakete zu Beginn ihrer Übertragung zwischen einem solchen Datendienste zur Verfügung stellenden Netzknoten (DK) und einer Teilnehmerendeinrichtung oder einem mit einer Teilnehmerendeinrichtung direkt oder indirekt in Verbindung stehenden Zugangsknoten einer Qualitätsklasse zugeordnet werden, der entsprechend die Datenpakete innerhalb der die Datenpakete weiterleitenden Zwischenknoten (ZW1,...,ZW4) behandelt werden, **dadurch gekennzeichnet,**
**dass** während der Übertragung von solchen Datenpaketen der Datendienste zur Verfügung stellende Netzknoten (DK) und/oder wenigstens ein Zwischenknoten (ZW1,...,ZW4) die Qualität der Übertragung anhand von die Qualitätsgüte angebenden Rückmeldungen feststellt sowie mit der vom Datendienst geforderten Qualitätsgüte vergleicht und dass abhängig vom Vergleichsergebnis die zu dem Datendienst gehörenden Datenpakete gegebenenfalls einer anderen Qualitätsklasse zugeordnet werden, von der die vom Datendienst geforderte Qualitätsgüte erwartet wird.

2. Verfahren nach Anspruch 1, **dadurch gekennzeichnet, dass** einer Qualitätsklasse mehrere Prioritätsklassen untergeordnet sind und dass die zu einem Datendienst gehörenden Datenpakete zuerst einer anderen Prioritätsklasse innerhalb einer Qualitätsklasse zugeteilt werden, bevor eine Zuordnung zu einer anderen Qualitätsklasse geschieht.

3. Verfahren nach Anspruch 2, **dadurch gekennzeichnet, dass** wenn die zum Datendienst gehörenden Datenpakete einer anderen Qualitätsklasse zugeordnet werden, die Datenpakete zuerst der niedrigsten Prioritätsklasse zugeordnet werden.

4. Verfahren nach Anspruch 2 oder 3, **dadurch gekennzeichnet, dass** für den Vergleich der rückgemeldeten Qualitätsgüte mit der vom Datendienst geforderten Qualitätsgüte zumindest ein oberer und zumindest ein unterer Schwellwert festgelegt werden, wobei bei Überschreiten zumindest des oberen Schwellwertes durch den Differenzwert zwischen der geforderten und der rückgemeldeten Qualitätsgüte die zum Datendienst gehörenden Datenpakete einer höheren Qualitätsklasse oder gegebenenfalls einer höheren Prioritätsklasse zugeordnet und bei Unterschreiten zumindest des unteren Schwellwertes durch den Differenzwert zwischen der geforderten und der rückgemeldeten Qualitätsgüte die Datenpakete einer niederen Qualitätsklasse oder gegebenenfalls einer niederen Prioritätsklasse zugeteilt werden.

5. Verfahren nach Anspruch 2, 3 oder 4, **dadurch gekennzeichnet, dass** neben der Qualität der Übertragung von solchen Datenpaketen auch die Netzauslastung rückgemeldet wird, wobei bei nahezu gleichem Wert der rückgemeldeten Qualitätsgüte und der vom Datendienst geforderten Qualitätsgüte sowie einer hohen Netzauslastung die Datenpakete einer hohen Qualitätsklasse oder gegebenenfalls einer hohen Prioritätsklasse zugeordnet und bei nahezu gleichem Wert der rückgemeldeten Qualitätsgüte und der vom Datendienst geforderten Qualitätsgüte sowie einer niedrigen Netzauslastung die Datenpakete einer niedrigen Qualitätsklasse oder gegebenenfalls einer niedrigen Prioritätsklasse zugeordnet werden.

6. Verfahren nach einem der vorhergehenden Ansprüche, **dadurch gekennzeichnet, dass** die an einem Zwischenknoten (ZW1,...,ZW4) eingehenden, zu einem Datendienst gehörenden Datenpakete vor ihrer Weiterleitung in einer ihrer Qualitätsklasse entsprechenden Warteschlange zwischengespeichert werden.

7. Verfahren nach einem der Ansprüche 2 bis 6, **dadurch gekennzeichnet, dass** die an einem Zwischenknoten (ZW1, ...,ZW4) eingehenden, zu einem Datendienst gehörenden Datenpakete vor ihrer Weiterleitung in einer Warteschlange zwischengespeichert und mit einer ihrer Prioritätsklasse entsprechenden Marke **gekennzeichnet** werden, anhand welcher die **gekennzeichneten** Datenpakete bei einem Überlauf der Warteschlange verworfen werden.

## Claims

1. Method for providing a stable quality grade for data services within a packet-switching network (PN) which has at least one access node (ZK) for connecting at least one subscriber terminal (TLN) and/or at least one private branch exchange having at least one connected subscriber terminal, and of whose network nodes at least one network node (DK) provides data services, the data packets associated with a data service being assigned, at the start of their transmission between a network node (DK) providing such data services and a subscriber terminal or an access node connected directly or indirectly to a subscriber terminal, to a quality class on the basis of which the data packets are handled within the intermediate nodes (ZW1,...,ZW4) which forward the data packets, **characterized**
**in that**, during the transmission of such data packets, the network node (DK) providing data services and/or at least one intermediate node (ZW1,...,ZW4) establishes the quality of the transmission on the basis of acknowledgements indicating the quality grade and compares it with the quality grade demanded by the data service, and in that, depending on the result of the comparison, the data packets associated with the data service are possibly assigned to another quality class, of which the quality grade demanded by the data service is expected.

2. Method according to Claim 1, **characterized in that** a quality class has a plurality of subordinate priority classes, and **in that** the data packets associated with a data service are first assigned to another priority class within a quality class before assignment to another quality class takes place.

3. Method according to Claim 2, **characterized in that**, if the data packets associated with the data service are assigned to another quality class, the data packets are first assigned to the lowest priority class.

4. Method according to Claim 2 or 3, **characterized in that** at least one upper and at least one lower threshold value are stipulated for the comparison between the acknowledged quality grade and the quality grade demanded by the data service and, if at least the upper threshold value is exceeded by the difference between the demanded quality grade and the acknowledged quality grade, the data packets associated with the data service are assigned to a higher quality class or possibly to a higher priority class, and, if at least the lower threshold value is undershot by the difference between the demanded quality grade and the acknowledged quality grade, the data packets are assigned to a low quality class or possibly to a low priority class.

5. Method according to Claim 2, 3 or 4, **characterized in that**, besides the quality of the transmission of such data packets, the network utilization level is also acknowledged, and, if the acknowledged quality grade and the quality grade demanded by the data service have virtually the same value and the network utilization level is high, the data packets are assigned to a high quality class or possibly to a high priority class, and, if the value of the acknowledged quality grade and of the quality grade demanded by the data service is virtually the same and the network utilization level is low, the data packets are assigned to a low quality class or possibly to a low priority class.

6. Method according to one of the preceding claims, **characterized in that** the data packets arriving at an intermediate node (ZW1,...,ZW4) and associated with a data service are temporarily stored in a queue which is based on their quality class before they are forwarded.

7. Method according to one of Claims 2 to 6, **characterized in that** the data packets arriving at an intermediate node (ZW1,...,ZW4) and associated with a data service are temporarily stored in a queue before being forwarded and are flagged using a marker which is based on their priority class and is used to discard the flagged data packets if the queue overflows.

## Revendications

1. Procédé pour fournir des services de transmission de données d'un degré de qualité stable dans un réseau de commutation par paquets (PN) qui comporte au moins un noeud d'accès (ZK) pour la connexion d'au moins un dispositif terminal d'abonné (TLN) et/ou d'au moins un commutateur privé avec au moins un dispositif terminal d'abonné y raccordé et parmi les noeuds de réseau duquel au moins un noeud de réseau (DK) met à disposition des services de transmission de données, les paquets de données d'un service de transmission de données, au début de leur transmission entre un tel noeud de réseau (DK) qui met à disposition des services de transmission de données et un dispositif terminal d'abonné ou un noeud d'accès relié directement ou indirectement à un dispositif terminal d'abonné, étant affectés à une classe de qualité conformément à laquelle les paquets de données sont traités dans les noeuds intermédiaires (ZW1, ..., ZW4) qui réacheminent les paquets de données, **caractérisé en ce que**, pendant la transmission de tels paquets de données, le noeud de réseau (DK) qui met à disposition des services de transmission de données et/ou au moins un noeud intermédiaire (ZW1, ..., ZW4) constatent la qualité de la transmission à l'aide de rétrosignaux indiquant le degré de qualité et comparent avec le degré de qualité requis par le service de transmission de données et **en ce que**, en fonction du résultat de la comparaison, les paquets de données du service de transmission de données sont affectés à une autre classe de qualité, le cas échéant, dont on attend le degré de qualité requis par le service de transmission de données.

2. Procédé selon la revendication 1, **caractérisé en ce que** plusieurs classes de priorité sont subordonnées à une classe de qualité et **en ce que** les paquets de données d'un service de transmission de données sont d'abord attribués à une autre classe de priorité à l'intérieur d'une classe de qualité avant que ne se produise une affectation à une autre classe de qualité.

3. Procédé selon la revendication 2, **caractérisé en ce que**, si les paquets de données du service de transmission de données sont affectés à une autre classe de qualité, les paquets de données sont d'abord affectés à la classe de priorité la plus basse.

4. Procédé selon la revendication 2 ou 3, **caractérisé en ce que**, pour la comparaison du degré de qualité retrosignalé en réponse avec le degré de qualité requis par le service de transmission de données, on détermine au moins une valeur seuil supérieure et au moins une valeur seuil inférieure, les paquets de données du service de transmission de données étant affectés à une classe de qualité supérieure ou, le cas échéant, à une classe de priorité plus élevée en cas de dépassement par le haut d'au moins la valeur seuil supérieure par la valeur de différence entre le degré de qualité requis et le degré de qualité rétrosignalé et les paquets de données étant attribués à une classe de qualité plus basse ou, le cas échéant, à une classe de priorité plus basse en cas de dépassement par le bas d'au moins la valeur seuil inférieure par la valeur de différence entre le degré de qualité requis et le degré de qualité rétrosignalé.

5. Procédé selon la revendication 2, 3 ou 4, **caractérisé en ce que**, outre la qualité de la transmission de tels paquets de données, la charge du réseau est également rétrosignalée, les paquets de données étant affectés à une classe de qualité élevée ou, le cas échéant, à une classe de priorité élevée pour une valeur pratiquement identique du degré de qualité rétrosignalé et du degré de qualité requis par le service de transmission de données et pour une charge du réseau élevée et les paquets de données étant affectés à une classe de qualité basse ou, le cas échéant, à une classe de priorité basse pour une valeur pratiquement identique du degré de qualité rétrosignalé et du degré de qualité requis par le service de transmission de données et pour une charge du réseau faible.

6. Procédé selon l'une des revendications précédentes, **caractérisé en ce que** les paquets de données d'un service de transmission de données entrant au niveau d'un noeud intermédiaire (ZW1, ..., ZW4), avant leur réacheminement, sont temporairement mis en mémoire dans une file d'attente correspondant à leur classe de qualité.

7. Procédé selon l'une des revendications 2 à 6, **caractérisé en ce que** les paquets de données d'un service de transmission de données entrant au niveau d'un noeud intermédiaire (ZW1, ..., ZW4) sont temporairement mis en mémoire dans une file d'attente avant leur réacheminement et sont pourvus d'une marque correspondant à leur classe de priorité à l'aide de laquelle les paquets de données marqués sont rejetés en cas de débordement de la file d'attente.
